**Europäisches Patentamt**

**European Patent Office**

**Office européen des brevets**

(19)

(11) Veröffentlichungsnummer: **0 141 147**
**B1**

(12) **EUROPÄISCHE PATENTSCHRIFT**

(45) Veröffentlichungstag der Patentschrift:
**22.06.88**

(21) Anmeldenummer: **84110534.9**

(22) Anmeldetag: **05.09.84**

(51) Int. Cl.⁴: **G 11 B 5/702**

ERRATUM

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT :<br>SHOULD READ :<br>DEVRAIT ETRE LU : |
|---|---|---|---|---|
| $>$4:1 | 2 | 2 | 65 | $\geq$4:1 |
| allgemeinen üblich | 3 | 3 | 54 | allgemeinen unüblich |
| Abriefbestigkeit | 3 | 3 | 57 | Abriebfestigkeit |
| Polyesteracrylat, Polyesteracrylat oder Urethanacrylat, | 3 | 4 | 51/52 | Polyesteracrylat, oder Urethanacrylat, |
| aus aus 60 bis 100 | 4 | 5 | 8 | aus 60 bis 100 |
| 1800 bis 10 00 | 4 | 5 | 33 | 1800 bis 10.000 |
| Hyderoxypivalinsäureneopentylgly-kolester, | 6 | 10 | 7/8 | Hydroxypivalinsäureneopentylgly-kolester, |
| 180, | 7 | 11 | 59 | $>$180, |
| einfacher alipohatischer, | 7 | 11 | 60 | einfacher aliphatischer, |
| aliphatischaromatischer Alkohole | 7 | 11 | 61 | aliphatisch-aromatischer Alkohole |
| auch die bei der Herstellung | 8 | 14 | 30 | auch bei der Herstellung |

Tag der Entscheidung
über die Berichtigung )
Date of decision on ) **16.09.88**
rectification: )
Date de décision portant )
sur modification: )

Ausgabe- und Veröffentlichungstag: )
Issue and publication ) **09.11.88**
date: )
Date d'edition et de )
publication: )

Patbl.Nr)

EPB no:) **88/45**

Bull. no:)

**Europäisches Patentamt**

**European Patent Office**

**Office européen des brevets**

(19)

(11) Veröffentlichungsnummer: **0 141 147**
**B1**

(12) ## EUROPÄISCHE PATENTSCHRIFT

(45) Veröffentlichungstag der Patentschrift:
**22.06.88**

(21) Anmeldenummer: **84110534.9**

(22) Anmeldetag: **05.09.84**

(51) Int. Cl.⁴: **G 11 B 5/702**

(54) **Magnetische Aufzeichnungsträger.**

(30) Priorität: **09.09.83 DE 3332564**

(43) Veröffentlichungstag der Anmeldung:
**15.05.85 Patentblatt 85/20**

(45) Bekanntmachung des Hinweises auf die Patenterteilung:
**22.06.88 Patentblatt 88/25**

(84) Benannte Vertragsstaaten:
**DE FR GB NL**

(56) Entgegenhaltungen:
**DE - A - 3 207 293**
**FR - A - 1 311 588**
**GB - A - 2 084 589**

(73) Patentinhaber: **BASF Aktiengesellschaft,**
**Carl-Bosch-Strasse 38, D-6700 Ludwigshafen (DE)**

(72) Erfinder: **Heil, Guenter, Dr., Dirmsteiner Weg 41,**
**D-6700 Ludwigshafen (DE)**
Erfinder: **Lenz, Werner, Dr.,**
**Heinrich-Baermann-Strasse 15, D-6702 Bad Duerkheim**
**(DE)**
Erfinder: **Kovacs, Jenoe, Dr., Kantstrasse 9,**
**D-6717 Hessheim (DE)**

# Beschreibung

Die Erfindung betrifft magnetische Aufzeichnungsträger aus einem unmagnetischen Trägermaterial mit mindestens einer Magnetschicht, bestehend aus einer organischen Bindemittelmatrix mit darin feinverteiltem magnetischem Material, wobei die Bindemittelmatrix durch Elektronenstrahlhärtung einer Mischung aus 60 bis 100 Gew.% eines Polyurethanacrylatpolymeren mit polymerisierbaren Doppelbindungen und 0 bis 40 Gew.% eines Acrylsäureesters und/oder -präpolymeren und/oder N-Vinylmonomeren und/oder -präpolymeren erhalten wird.

Die derzeit vorwiegend verwendeten magnetischen Aufzeichnungsträger in Form von Audio-, Video- und Computerbändern sowie anderer magnetischer Datenträger mit flexiblen oder harten Trägermaterialien wie Floppy-Disk oder Hard-Disk, werden meist dadurch hergestellt, dass man Magnetdispersionen aus Magnetpigmenten und mechanisch hochwertigen Bindemitteln herstellt, auf den Träger aufbringt, in vielen Fällen die Magnetteilchen magnetisch ausrichtet, physikalisch durch Verdampfen von grossen Mengen Lösungsmitteln trocknet, die Oberfläche glättet und danach zum Erzielen verschleissfester Schichten gegebenenfalls chemisch vernetzt.

Im Falle besonders hochwertiger flexibler Aufzeichnungsträger bestehen diese Bindemittel überwiegend aus hochmolekularen zähen Thermoplasten wie z.B. Polyurethanen und thermisch wirkenden Vernetzern, z.B. mehrfunktionellen Isocyanaten.

Die Trocknung und eine teilweise Härtung erfolgt hierbei unmittelbar nach dem Aufbringen der Schicht auf den Träger im Trockenofen. Die vollständige Aushärtung erfolgt langsam innerhalb einiger Tage bis Wochen. Solche für die Herstellung mechanisch hochbeanspruchbarer magnetischer Aufzeichnungsträger ausgewählten Bindemittelsysteme bewirken zwar ausgezeichnete mechanische Eigenschaften der Magnetschichten wie geringer Abrieb, gute Haftung zum Träger, Überstehen der vielfältigen Umlenkungen im Bandbetrieb ohne Bruch oder Verkleben, langer Lebensdauer auch unter verschiedenen klimatischen Bedingungen usw., sie bedingen jedoch auch einen hohen Aufwand bei der Fertigung.

So verlangen z.B. die hohen Molekulargewichte für die Verarbeitung eine hohe Lösungsmittelmenge. Typisch sind Bindemittelkonzentrationen von 10 bis 15 Gew.%. Zusätzlich eine vergleichbar grosse Menge Lösungsmittel wird benötigt, wenn das Magnetpigment hinzukommt. Typische Verhältnisse für hochwertige Audio- und Videobänder sind z.B. Pigment : Bindemittel : Lösungsmittel = 4–4,5 : 1 : 11–12.

Dies bedeutet entsprechend hohe Lösungsmittelkosten bzw. hohen Aufwand bei der Lösungsmittelrückgewinnung. Bei der Herstellung der Magnetdispersion wird das Volumen der Dispergierapparate zum erheblichen Teil durch Lösungsmittel und nur in geringem Masse für die Anteile der eigentlichen Magnetschicht genutzt.

Ein weiterer Nachteil der Verwendung von hochmolekularen Thermoplasten ist die damit indirekt verbundene Verschlechterung der magnetischen Eigenschaften der magnetischen Materialien. Bei der Dispergierung werden zu einem gewissen Anteil nadelförmige Magnetteilchen zerrieben, was zu Bandrauschen und verschlechterter Kopierdämpfung führt. Einer rascheren und schonenderen Dispergierung wird seitens des Bindemittels wegen der hohen Molekulargewichte als Folge der Anforderungen nach höchster mechanischer Qualität eine gewisse Grenze gesetzt. Eine prinzipielle Grenze existiert auch bei den magnetischen Ausrichtung der Pigmente in der noch flüssigen Schicht kurz nach der Beschichtung. Das Bindemittel setzt dem Ausrichten einen Widerstand entgegen. Je besser die Ausrichtung, desto besser ist bei einem bestimmtem Pigmenttyp und gegebener Pigmentkonzentration auch die Empfindlichkeit und Aussteuerbarkeit.

Die Verwendung von Isocyanaten zur thermischen Vernetzung der hochmolekularen Thermoplasten ist für die Herstellung der magnetischen Schichten ebenfalls mit Nachteilen bzw. einem hohen Aufwand verbunden. Als 2-Komponenten-System können jeweils nur kleinere Mengen angesetzt werden, um keine pot-life Probleme zu erhalten. Um eine gleichmässige Produktion auf sehr hohem Niveau zu erreichen, müssen eine Vielzahl von Einflüssen im Produktionsablauf kontrolliert und in ihrem zeitlichen Ablauf genau gesteuert werden. Das Verfahren reagiert daher empfindlich auf auftretende Störungen, was zu Ausfällen führen kann.

Aus der DE-OS 2 100 037 ist ein Verfahren bekannt, bei dem als Bindemittel olefinisch ungesättigte polymerisierbare Gemische aus copolymerisierbaren höher- und niedrigmolekularen Lackharzen und Monomeren eingesetzt werden, die so ausgewählt sind, dass mindestens 15 Gew.% Acrylesterreste im Bindemittel bildenden Gemisch enthalten sind und eine Viskosität des Bindemittels ohne Lösungsmittel von 0,05 bis 3 Pas resultiert. Durch Bestrahlung der auf einen Träger aufgebrachten magnetischen Dispersionsschicht, enthaltend diese Bindemittel, mittels ionisierender Strahlung in Form beschleunigter Elektronen, wird aus den relativ niedrigmolekularen Bindemittelkomponenten in Sekundenbruchteilen ein hochmolekulares, vernetztes Material erhalten. Bei dem Verfahren wird kein Lösungsmittel benötigt. Es ist eine vereinfachte Handhabung möglich, da pot-life Probleme entfallen. Bei der Herstellung der Dispersion wurde eine Reduzierung der Dispergierzeit in Kugelmühlen von 7 und 5 Tage erreicht. Von Nachteil ist jedoch, dass wegen des Fehlens von Lösungsmitteln nur Gewichtsverhältnisse von maximal 2:1 für eine einwandfreie Beschichtung gut handhabbar sind und deswegen Audio- und Video-Anwendungen mit Pigment : Bindemittel Verhältnissen > 4:1 mit praktisch befriedigenden Ergebnissen hinsichtlich Auftragsverfahren und Schichtdicke nicht realisiert werden können.

Durch Mitverwendung von Lösungsmitteln wird dieses Problem gemäss der DE-OS 2 201 430 überwunden. Es ergibt sich dabei jedoch ein neu auftretender Nachteil. Um möglichst viel Lösungsmittel einzusparen und gleichzeitig eine rasche Härtung bzw. eine niedrige Aushärtungsdosis zu erzielen, wird ein hoher Anteil an Acryl-Monomeren mitverwendet, entsprechend einer Menge von mindestens 15 Gew.%, bevorzugt 40 bis 70 Gew.% des Bindemittels. Wegen des damit einhergehenden hohen Polymerisations-Schrumpfes und sehr hohen Vernetzungsgrades tritt eine starke Hohlkrümmung an flexiblen Bändern auf. Einem verbesserten Abrieb bei Anwendung auf starren Aufzeichnungsträgern bzw. bei Abriebbeanspruchungen, bei denen es überwiegend auf das Überstehen eher kratzender Beanspruchung ankommt, steht ein zu hoher Abrieb bei flexiblen Aufzeichnungsträgern gegenüber bzw. bei Beanspruchungen, bei denen es gleichzeitig auf hohe Flexibilität ankommt. Die daraus hergestellten Magnetschichten weisen einen zu hohen Abrieb wegen mikroskopisch kleiner Sprödbrüche auf. Insgesamt erwiesen sich die so hergestellten magnetischen Aufzeichnungsträger als noch nicht ausreichend.

In der japanischen Offenlegungsschrift 50 077 433 wird als elektronenstrahlhärtbares Bindemittel ein Polyetherurethanacrylat mit einem Molekulargewicht grösser als 400 und mindestens zwei polymerisierbaren Doppelbindungen pro Molekül verwendet. Dieses Bindemittel wird hergestellt durch Umsetzung eines Polyetherols, enthaltend OH-Endgruppen, mit Toluylendiisocyanat in einer ersten Reaktionsstufe und des resultierenden Isocyanatendgruppen enthaltenden Präpolymeren mit Hydroxyethylacrylat in einer zweiten Reaktionsstufe. Nach Einstellung auf Giessviskosität erhält man eine Bindemittellösung mit einem Festkörpergehalt von ca. 60 Gew.%. Dies bedeutet gegenüber ca. 10 bis 15%igen Lösungen bei nicht strahlungshärtbaren, konventionellen, hochpolymeren Magnetbindemitteln immer noch eine erhebliche Lösungsmitteleinsparung. Daraus gefertigte Magnetbeschichtungen ergeben sehr flexible, gut haftende Filme. Eine Hohlkrümmung tritt nicht auf. Die Abriebfestigkeit der Beschichtungen ist jedoch schlecht, da die Filme zu weich und zu wenig zäh sind. Es kann nur bis zu Pigment : Bindemittel-Verhältnissen von 2 : 1 und nur unter Zusatz erheblicher, im allgemeinen üblich hoher Mengen nicht einpolymerisierbarer Hilfsstoffe, wie Polyethylenwachs und Silikonöle, eine mässige, im Dauerbetrieb unbefriedigende Abriefbestigkeit erzielt werden. Vor allem im Klimatest werden nur ungenügende Werte erreicht.

In der japanischen Offenlegungsschrift 54 124 709 werden als elektronenstrahlhärtbare Bindemittel für magnetische Aufzeichnungsträger Gemische erwähnt, die als wesentliche Bestandteile weitgehend ähnliche Substanzklassen umfassen, wie sie bereits in den oben genannten deutschen Offenlegungsschriften beschrieben wurden. Darüber hinaus sind auch Urethanacrylate für die Verwendung als Magnetbindemittel aufgeführt, wie sie im Prinzip bereits aus der Chemie strahlungshärtbarer Beschichtungssysteme von nicht magnetischen Anwendungen bekannt sind. Hierbei wird ein relativ niedrigmolekulares Urethanacrylat zusammen mit hochvernetzendem Monomer und nicht vernetzendem monofunktionellem Monomer eingesetzt. Das als Typ aus anderen Anwendungen bekannte Urethanacrylat ist aufgebaut aus einem Diisocyanat mit zwei verschieden reaktiven Isocyanatgruppen, einem niedrigmolekularen oligomeren Polyesterdiol und Hydroxyethylacrylat. Solche Urethanacrylate werden üblicherweise in einer zweistufigen Reaktion unter Verwendung unterschiedlich reaktiver Gruppen und verschiedener Temperaturen aufgebaut, um definierte grössere Moleküle mit Molgewichten bis etwa 2000 zu erhalten. Diese sind charakterisiert durch zwei endständige Acrylester-Doppelbindungen und eine sehr enge Molgewichtsverteilung, mit der eine möglichst geringe Viskosität bzw. ein geringer Lösungsmittelbedarf erzielt werden soll.

Die Bindemittel dieser Offenlegungsschrift ermöglichen daher hohe Festkörperkonzentrationen, sind andererseits jedoch zu wenig zäh, so dass sich bei Beanspruchung auf Elastizität und Abrieb schlechte Abriebwerte ergeben. Diese werden verbessert durch eine Vorbehandlung der Trägerfolie mittels Bestrahlung durch UV-Licht, was eine verbesserte Haftung der Magnetschicht zur Folge hat. Für Audio- und Videobänder geeignete magnetische und elektroakustische Eigenschaften werden bei den eingesetzten Pigment:Bindemittel-Verhältnissen von 1,5 : 1 bis 2,0 : 1 jedoch nicht erreicht. Die hierfür benötigten magnetischen Werte würden sich zwar unter Verwendung höherer Pigmentkonzentrationen erreichen lassen, die mechanischen Eigenschaften sind dann jedoch in jedem Fall unzureichend.

Gemäss der DE-OS 3 029 819 wurde versucht, die mechanischen Vorteile von magnetischen Aufzeichnungsträgern mit hochmolekularen thermoplastischen Polyurethanen, vernetzt mittels polyfunktioneller Isocyanate, zu verbinden mit den Vorteilen der Elektronenstrahlhärtung, indem man als Bindemittel ein Gemisch aus hochmolekularem thermoplastischem Polyurethan und Oligoacrylat in Form von Polyesteracrylat, Polyesteracrylat oder Urethanacrylat, einsetzt. Befriedigende bis gute Abriebwerte werden vor allem bei Mengenverhältnissen um 50 : 50 erreicht. Die Abriebmengen sind jedoch noch nicht genügend im Hinblick auf die inzwischen gesteigerten Anforderungen.

Es bestand daher die Aufgabe, magnetische Aufzeichnungsträger der im Oberbegriff des Anspruches 1 genannten Art derart fortzubilden, dass unter Beibehaltung der Vorteile einer durch Elektronenstrahlhärtung gebildeten Bindemittelmatrix, die Aufzeichnungsträger dennoch sehr gute mechanische und magnetische Eigenschaften aufweisen.

Es wurde nun gefunden, dass magnetische Aufzeichnungsträger aus einem nichtmagnetischen Trägermaterial mit mindestens einer Magnetschicht, bestehend aus einer organischen Bindemittelmatrix mit darin feinverteiltem magnetischem Material, wobei die Bindemittelmatrix durch Elektronenstrahlhärtung einer Mischung aus aus 60 bis 100 Gew.% eines Polyurethanacrylatpolymeren mit polymerisierbaren Doppelbindungen und 0 bis 40 Gew.% eines Acrylsäureesters und/oder -präpolymeren und/oder N-Vinylmonomeren und/oder -präpolymeren erhalten wird, den gestellten Anforderungen genügen, wenn das Polyurethanacrylatpolymere aus

1) mindestens einem Diisocyanat,
2) mindestens einem oligomeren oder polymeren Diol,
3) mindestens einem niedermolekularen cyclischen Diol und
4) mindestens einem Monohydroxyalkylacrylat

aufgebaut ist, wobei der Anteil der NCO-Gruppen des Diisocyanats 95 bis 105% der äquivalenten Mengen an OH-Gruppen der Komponenten 2 bis 4 beträgt und die Molmengen der OH-gruppenhaltigen Komponenten derart bemessen sind, dass sich eine Konzentraton von 2,4 bis 3,9 Mol Urethangruppen je Kilogramm Polyurethanacrylatpolymeren ergibt, mit der Massgabe, dass das mittlere Molekulargewicht des Polymeren im Zahlenmittel 1800 bis 10 00 und das Verhältnis aus Gewichtsmittel zu Zahlenmittel des Mol-Gewichts 2,2 bis 3,5 beträgt.

EP-A 0 137 307, das zum Stand der Technik gemäss Artikel 54(3) EPÜ gehört, beschreibt ähnliche magnetische Aufzeichnungsträger, jedoch wird als Komponente 3) ein nicht cyclisches Diol verwendet. Das allein oder zumindest vorwiegend die mittels Elektronenstrahlhärtung geformte Bindemittelmatrix der erfindungsgemässen magnetischen Aufzeichnungsträger bildende Polyurethanacrylatpolymer enthält aufgrund der Art seiner Herstellung sowohl Moleküle, die nur ein sehr niedriges Molekulargewicht aufweisen und im einfachsten Fall nur aus einem Diisocyanatmolekül und zwei Hydroxyalkylacrylatmolekülen entstanden sind, als auch Moleküle, die sehr hochmolekular, mit Molekulargewichten von über 10 000, aufgebaut sind. Daneben gibt es auch eine kleinere Menge von Verbindungen, die nur eine Art von Diol im Molekül enthalten. Obwohl bei durchschnittlichen Molekulargewichten des Zahlenmittels von z.B. 6000 noch Molekulargewichte von ca. 110 000 bis 120 000 mittels Hochdruck-Gelchromatographie nachgewiesen werden konnten, so ist doch das Gewichtsmittel des gesamten Polyurethangemisches deutlich niedriger, z.B. bei dem Zahlenmittel von 6000 typischerweise etwa in der Grössenordnung von 16 000 bis 18 000.

Bei geeigneter Abstimmung der zum Aufbau der Polyurethanacrylate kommenden Komponenten nach Art und Menge und weiterer geeigneter Abstimmung mit den gegebenenfalls zuzumischenden anderen strahlungshärtbaren Bindemittelbestandteilen ist es mit diesen breit verteilten Polyurethanacrylatpolymeren möglich, nach Bestrahlung mit beschleunigten Elektronen sehr zähe Bindemittelfilme zu erhalten. Während bisher bei reinen strahlungspolymerisierten, freien Filmen in Zugprüfungsversuchen hohe Reissfestigkeiten nur bei gleichzeitig niedrigen Reissdehnungen und umgekehrt möglich waren, z.B. Reissfestigkeiten von mehr als 30 N/mm$^2$ nur bei Reissdehnungen von ca. 10 bis 50% oder Reissfestigkeiten von ca. 15 bis 25 N/mm$^2$ bei Dehnungen von ca. 100%, können jetzt Reissfestigkeiten von mehr als 35 bis 40 N/mm$^2$, in Einzelfällen von 45 bis 50 N/mm$^2$, gleichzeitig mit Dehnungen von ca. 100 bis 200% realisiert werden.

Dies macht es möglich, bei hochpigmentierten Magnetschichten gleichzeitig eine gute Abriebfestigkeit gegenüber rein kratzender und stark reibenden Beanspruchungen, aufgrund hoher Reissfestigkeit und hoher Abriebbarkeit zu erhalten, als auch hohe Abriebfestigkeit zu erzielen, wenn ausserdem eine bruchartig verformende Beanspruchung überstanden werden muss, was eine hohe Dehnbarkeit erfordert.

Die Härte und Flexibilität hängt jedoch nicht nur von der Molekulargewichtsverteilung des verwendeten Polyurethanacrylats ab, sondern auch von der Grösse des Vernetzungsgrades der gehärteten Bindemittelmischung, der sich über die Konzentration an vernetzenden Acrylesterdoppelbindungen einstellen lässt.

Der Beitrag der einzelnen zum Aufbau des Bindemittels dienenden Komponenten zur der sich nach der Polymerisation einstellenden Glasübergangstemperatur oder dem Elastizitätsmodul als Mass für die Härte, ist ebenfalls zu beachten.

Diese Einstellungen halten sich jedoch im Rahmen dessen, was der Fachmann üblicherweise unternimmt, um Formulierungen mit niedrigem oder hohem Vernetzungsgrad bzw. Elastizitätsmodul zu erhalten, indem er geeignete Mengen an funktionellen Monomeren zusetzt bzw. Komponenten mit weicheren oder härteren Strukturelementen auswählt, deren Kombinationen die Einstellung niedrigerer oder höherer Modulwerte erlauben. Modulwerte kleiner als 700, vorzugsweise 100 bis 500 N/mm$^2$ sind gut geeignet. Für magnetische Aufzeichnungsträger mit weniger hohen Ansprüchen an die Elastizität oder mit niedrigen Pigment : Bindemittel-Verhältnissen können auch noch Elastizitätsmodulwerte bis etwa 1000 N/mm$^2$ verwendet werden. Werte kleiner als 100 N/mm$^2$, z.B. 10 bis 20 N/mm$^2$ können ebenfalls noch gute Abriebeigenschaften bei Band-Anwendungen ergeben, jedoch leiden dann häufig Dauerlaufeigenschaften und Klimafestigkeit.

Die Vernetzungskonzentration der Bindemittel darf nicht zu hoch angesetzt werden. Sie ergibt sich durch die Konzentration aller Acrylesterdoppelbindungen, die in Verbindungen enthalten sind, welche mehr als eine solche Doppelbindung im Molekül enthalten. Eine Vernetzungskonzentration von 0,2 bis 1,5 Mol Acrylesterdoppelbindung, vorzugsweise 0,5 bis 1,1 Mol pro kg Bindemittelgemisch (ohne Lösungsmittel), ist im allgemeinen für flexible, hochpigmentierte magnetische Aufzeichnungsträger ausreichend. Für weniger kritische Anwendungen sind Vernetzungskonzentrationen von max. 2 bis 2,5 zweckmässig. Eine Vernetzungskonzentration von 1,0 entspricht 7,1 Gew.% Acrylresten $CH_2=CH-COO-$.

Die Vernetzungskonzentration kann auf verschiedene Art und Weise gesteuert werden. Werden ausschliesslich nur Polyurethanacrylatpolymere mit terminalen Acrylesterendgruppen verwendet, ist mit dem Molekulargewicht auch die Vernetzungskonzentration festgelegt. Ein Molekulargewichtszahlenmittel von ca. 1800 bis 4000 ergibt somit den bevorzugten Bereich der Vernetzungskonzentration. Bei Verwendung höherer Molgewichte mit zwangsläufig geringeren Vernetzungskonzentrationen kann entsprechend mit stärker vernetzenden Präpolymeren und/oder Monomeren ausgeglichen werden.

Andererseits lässt sich eine zu hohe Vernetzungskonzentration durch zu niedrig molekulare Polymere und Präpolymere durch Zusatz monofunktioneller Monomerer vermindern. Bei Molekulargewichten des Polyurethanacrylats von < 2000 beginnen manche mechanischen Eigenschaften schlechter zu werden und sind bei Molekulargewichten unterhalb von 1000 für Anwendungen mit hohen Ansprüchen an die Elastizität kaum noch brauchbar. Nach oben sind der Auswahl des Molekulargewichts zum Erzielen guter mechanischer Eigenschaften keine Grenzen gesetzt, wohl aber hinsichtlich Lösungsmitteleinsparung und der Beeinflussung magnetischer Eigenschaften.

Für die Steuerung der Eigenschaften des Polyurethanacrylates und der Auswahl des Molverhältnisses der Diolkomponenten zueinander kann als Kenngrösse die Konzentration der Urethangruppen im Polyurethanacrylatpolymer dienen. Wegen der sehr unterschiedlichen Äquivalentgewichte der möglichen einsetzbaren Komponenten ergibt sich auch eine sehr grosse Variationsbreite der Molverhältnisse der Komponenten im Polyurethanacrylatpolymeren zueinander. Für die Mengenverhältnisse gilt folgendes:

Im Falle dass die eingesetzten Isocyanatgruppen und Hydroxylgruppen vollständig zu Urethangruppen umgesetzt sind, ist unabhängig vom Ausmass etwaiger durch Nebenreaktionen entstandener andersartiger Bindungen des Isocyanat-Stickstoffs in untergeordneten Mengen, die theoretisch über die Stöchiometrie leicht errechenbare Konzentration an Urethangruppen ein wertvolles Hilfsmittel für die Auswahl geeigneter Zusammensetzungen. Das die Bindemittelmatrix bildende Polyurethanacrylatpolymer weist eine Urethankonzentration von 2,4 bis 3,9, bevorzugt von 2,7 bis 3,6 Mol/kg auf. Je höher die Urethankonzentration ist, desto zäher sind die Bindemittel, aber umso ungünstiger wird das rheologische Verhalten für die Verarbeitung, wobei auch die magnetischen Eigenschaften sich vom optimal möglichen entfernen. Zu niedrige Urethangruppenkonzentrationen bewirken das jeweilige Gegenteil. Die obere Grenze wird also durch das Fliessverhalten und die untere Grenze durch die mechanischen Eigenschaften bestimmt.

Die reinen Polyurethanacrylate sind bei Urethankonzentrationen von weniger als ca. 2,7, in ungünstigen Fällen bereits bei Konzentrationen kleiner 3,1 Mol NH/kg zu weich, wenn als Diole nur aliphatische Komponenten verwendet werden, wie sie in der Polyurethanchemie üblich und kostengünstig zugänglich sind. Zur Einstellung des unteren Urethankonzentrationsbereiches sind cyclische Diole mit höheren OH-Äquivalentgewichten besser geeignet als solche mit niedrigen Äquivalentgewichten, z.B. ethoxyliertes Bisphenol ist hier günstiger als Di-hydroxymethylcyclohexan.

Bei Verwendung grösserer Mengen an harten Acrylesterpräpolymeren und/oder Monomeren kann auch eine noch geringere Urethankonzentration als 2.7 Mol/kg zur Einstellung des am besten geeigneten Härtebereiches bzw. Elastizitätsmodulbereiches gewählt werden.

Beim Einsatz des Polyurethanacrylatpolymeren als einzigem nach der Elektronenstrahlhärtung die Bindemittelmatrix der Magnetschicht des erfindungsgemässen Aufzeichnungsträgers bildenden Bindemittel wird ein Molekulargewichtszahlenmittel von 1800 bis 6000, insbesondere von 1800 bis 4000 bevorzugt. Ein Zusatz von bekannten Acrylestermonomeren oder -präpolymeren bzw. anderen Vinylmonomeren führt zu einer weiteren Verbreiterung der Molgewichtsverteilung der Bindemittel in Form bi- oder polymodaler Verteilungen. Geeignet sind Mengen von bis zu 40% an strahlungshärtbaren Komponenten zum Polyurethanacrylatpolymeren, wobei Mengen von bis zu 25% bevorzugt sind.

Zur Herstellung der Polyurethanacrylatpolymeren mit breiter Molekulargewichtsverteilung brauchen die Hydroxyl- und Isocyanatkomponenten nicht stufenweise miteinander umgesetzt zu werden. Es genügt im allgemeinen die Vorlage einer Art von Reaktant und Zulauf der anderen Art. Eine besondere Art der Temperaturführung ist hier nicht nötig. Vorzugsweise werden alle Hydroxylkomponenten in einem Lösungsmittel vorgelegt und bei einer Reaktionstemperatur zwischen 40 und 80°C, vorzugsweise zwischen 60 und 70°C des Diisocyanat oder ein Diisocyanatgemisch unter Kühlung in 0,5 bis 3 Stunden zulaufen gelassen. Anschliessend wird einige Stunden weitergerührt bis ein Restisocyanatgehalt von weniger als 0,1 Gew.% NCO erreicht wird. Zur vollständigen Umsetzung werden übliche Katalysatoren eingesetzt. Auf einfache Weise wird so die gewünschte Polyurethanacrylatlösung zur weiteren Verarbeitung erhalten. Das gewünschte Molekulargewicht lässt sich relativ leicht durch Berechnung der einzusetzenden Menge an Monohydroxyalkylacrylat, welches als Kettenabbrecher dient, steuern.

Mit dem geschilderten einfachen Verfahren ergibt sich automatisch die bevorzugte breite Molgewichtsverteilung. Die Breite der Verteilung kann zusätzlich modifiziert werden, indem beispielsweise zwei oder mehrere so hergestellte Polyurethanacrylate mit unterschiedlichen Durchschnittsmolekulargewichten in einem Bindemittel zusammen kombiniert oder durch stufenweises Verfahren hergestelltes, enger verteiltes Polyurethanacrylat mit ähnlichem Molekulargewichtsmittel, zugesetzt wird.

Die Verwendung von sehr leicht polymerisationsfähigen Acrylesterdoppelbindungen macht als zusätzliche Massnahme eine geeignete Stabilisierung nötig, um vorzeitige Gelierung, Quellkörperbildung oder auch nur ein unerwünschtes Molekulargewicht ausserhalb der berechneten, zu vermeiden. Hierzu eignen sich eine Vielzahl radikalischer Inhibitoren, wie sie aus der Chemie strahlungshärtbarer Überzüge als Stand der Technik bekannt sind.

Zur Herstellung der Polyurethanacrylatpolymeren geeignete Diisocyanate (Komponente 1) können aliphatischer, cycloaliphatischer oder aromatischer Natur sein. Es kommen z.B. in Frage Hexamethylendiisocyanat, 2,2,4- bzw. 2,4,4-Trimethylhexamethylendiisocyanat, Isophorondiisocyanat, Bis-(4-isocyanatocyclohexyl)-methan, Bis-(3-methyl-4-isocyanato-cyclohexyl)-methan, 2,2-Bis-(4-isocyanato-cyclohexyl)-propan, 4,4'-Diphenylmethandiisocyanat, 2,4- bzw. 2,6-Toluylendiisocyanat und 1,5-Naphthylendiisocyanat. Als oligomere oder polymere Diole einsetzbare Komponenten 2) weisen Molgewichte von 400 bis 2500, vorzugsweise von 700 bis 2000 auf. Kleinere Molgewichte bewirken eine schlechtere Mechanik, höhermolekulare Diole verschlechtern zum Teil des Fliessverhalten. Molgewichte von 800 bis 1800 sind im allgemeinen besonders vorteilhaft. Es lassen sich die aus der Chemie der elastomeren Polyurethan-Hochpolymeren bekannten Substanzen einsetzen. Hier sind zu nennen: Polyesterole, wie Adipate auf Basis von Glykolen, Polycaprolactone, Polyether und Polycarbonate. Polyether wie z.B. Polytetrahydrofuran, Polypropylenglykol und andere eignen sich weniger als alleinige Polydiolkomponente, da sie zu weiche und stärker feuchtigkeitsempfindliche Produkte liefern. Sie sind daher im allgemeinen in Form von Mischungen mit anderen Polydiolen verwendbar. Bevorzugte Polydiole sind Adipate mit Glykol (MG 2000), mit Diethylenglykol (MG 2000), mit Butandiol-1,4 (MG 900 bis 1100), mit Hexandiol-1,6 (MG 800 bis 2500) und 2,2-Dimethyl-1,3-propandiol (MG 900 bis 1100) oder Polycaprolactone (MG 830 und 2000) und Polycarbonat (MG 2000).

Als niedrigmolekulare cyclische Diole der Komponente 3) kommen Diole mit Molekulargewichten bis etwa 500, vorzugsweise kleiner als 320 in Frage. Als Beispiele seien genannt: 1,4-Dihydroxymethylcyclohexan, 4,4'-Dihydroxybis-cyclohexyl-methan, 3(4),8(9)-Dihydroxymethyltricyclo-[5.2.1.0]-decan, 1,4;3,6-Dianhydro-mannitol, 1,4;3,6-Dianhydro-sorbitol, Anhydroerythritol, oxethylierte oder oxpropylierte Derivate davon sowie oxethyliertes oder oxpropyliertes Bisphenol-A. Daneben können gegebenenfalls in untergeordneten Mengen aliphatische Diole wie z.B. Ethylenglykol, Propandiol-1,2, Propandiol-1,3, Butandiol-1,4, Hexandiol-1,6, Pentandiol-1,5, Decandiol, Methyl-1,3-propandiol, 2,2-Dimethyl-1,3-propandiol, 2,2-Dimethyl-1,4-butandiol, 2-Methyl-2-butyl-1,3-propandiol, Hyderoxypivalinsäureneopentylglykolester, Diethylenglykol, Triethylenglykol, Tetraethylenglykol, Dipropylenglykol, Tripropylenglykol usw. mitverwendet werden.

Als Monohydroxyalkylacrylate der Komponente 4) werden Acrylsäureester mit Molekulargewichten von 116 bis ca. 350 eingesetzt, die sich formal aus Diolen oder Triolen und Acrylsäure ableiten, wie z.B. Ethylenglykolmonoacrylat, 1,2-Hydroxypropylacrylat, 1,3-Hydroxypropylacrylat, 1,4-Butandiolmonoacrylat, n-Butylglycerinethermonoacrylat, 2-Ethylhexylglycerinethermonoacrylat, Versaticsäureglycerinestermonoacrylat. Diese Acrylsäureester lassen sich nach bekannten Verfahren entweder aus den entsprechenden Diolen durch Direktveresterung oder Umesterung herstellen bzw. in Form von 2-Hydroxyalkylacrylestern durch Umsetzung von Acrylsäure mit Epoxiden, Glycidylethern oder Glycidylestern, wie z.B. Ethylenoxid, Propylenoxid, Butylenoxid, n-Butylglycidylether, 2-Ethylhexylglycidylether oder Versaticsäureglycidylester, gewinnen (GB-PS 1 375 177).

Die Polyurethanacrylatpolymeren werden vorwiegend in Lösung hergestellt. Als Lösungsmittel kommen solche Lösungsmittel in Frage, die frei sind von Gruppen, die mit Isocyanaten reagieren können, wie z.B. Ketone, Ether und Ester, gegebenenfalls auch aromatische oder chlorierte Kohlenwasserstoffe und Mischungen davon. Aceton, Methylethylketon, Tetrahydrofuran, Dioxan und Ethylacetat, Methylenchlorid sind bevorzugt. Es lassen sich jedoch auch alle übrigen Lösungsmittel, wie sie heute zur Herstellung von magnetischen Aufzeichnungsträgern unter Verwendung von hochmolekularen thermoplastischen Hochpolymeren verwendet werden, in untergeordneter Menge zur Steuerung bestimmter Eigenschaften, wie z.B. Fliesseigenschaften mitverwenden. Bei Verwendung von Ethern ist auf Peroxidfreiheit zu achten, damit keine vorzeitige Polymerisation der Acrylesterdoppelbindungen eintritt.

Bei Molekulargewichten bis ca. 2000 können die Polyurethanacrylatpolymeren auch lösungsmittelfrei hergestellt werden. Dies kann zweckmässig sein, z.B. wenn nicht sofort weiter verarbeitet wird, sondern eine längere Zwischenlagerung oder ein grösserer Transport vorgesehen ist.

Die Umsetzung der Isocyanatgruppen mit den Hydroxylgruppen lässt sich im bevorzugten Temperaturbereich auch ohne Katalysator durchführen. Da die Reaktion bei hohen Umsätzen ohne Verwendung von Überschüssen einer Reaktionskomponente sehr langsam wird, ist der Einsatz von Katalysatoren günstiger. Es sind aus der Polyurethanchemie bekannte Katalysatoren, die hier zum Einsatz kommen können wie tert. Amine, Metallsalze von Fettsäuren und andere org. Metallverbindungen. Vorzugsweise werden solche Katalysatoren ausgewählt, die überwiegend die Urethanbildung katalysieren und Reaktionen wie Allophanatbildung oder Isocyanuratisierung möglichst wenig begünstigen. Verbindungen des vierwertigen Zinns wie Dibutylzinndilaurat sind besonders gut geeignet. Im allgemeinen hat es sich als zweckmässig erwiesen, 0,005 bis 0,3, vorzugsweise 0,01 bis 0,15 Gewichtsteile für jeweils 100 Gewichtsteile Polyurethanacrylat zu verwenden. Der Katalysator kann zu Beginn der Reaktion mit vorgelegt werden, mit dem Zulauf allmählich dem Reaktionsgemisch zugeführt werden oder auch erst in der Nachrührphase zugegeben werden.

Ausser dem Polyurethanacrylatpolymer enthalten die erfindungsgemässen Bindemittel im allgemeinen weitere strahlungshärtbare Komponenten in Form von relativ niedrig molekularen und im Molekulargewicht meist auch relativ eng verteilten Harzen und Monomeren. Solche polymerisierbaren Verbindungen sind bekannter Stand der Technik auf dem Gebiet der mit UV-Licht oder Elektronenstrahlen härtbaren Beschichtungsmassen. U.A. sei auf die DE-OS 2 049 714, DE-OS 2 049 715, DE-OS 2 064 701, DE-OS 2 232 822, DE-OS 2 249 446, DE-OS 2 358 948, DE-OS 2 441 148, DE-OS 2 452 322, DE-OS 2 636 425 und DE-OS 2 636 426 verwiesen, bei denen solche strahlungshärtbaren Komponenten für andere Anwendungen beschrieben sind.

Von den vielen hier aufgeführten Substanzen eignen sich für die Anwendung auf magnetische Aufzeichnungsträger vor allem jene Produkte, die als radikalisch polymerisierbare Doppelbindungen Acryl-Doppelbindungen oder N-Vinyl-Doppelbindungen im Molekül enthalten.

Statt Acrylverbindungen sind auch Methacrylverbindungen möglich. Wegen der deutlich niedrigeren Polymerisationsgeschwindigkeit sollten sie jedoch höchstens in kleinerem Umfang, kombiniert mit Acrylverbindungen, verwendet werden. N-Vinyl-Doppelbindungen enthaltende Verbindungen sind in einer solchen Menge einzusetzen, dass bezogen auf die Gesamtkonzentration aller polymerisierbaren Doppelbindungen, auf die N-Vinyl-Doppelbindungen nicht mehr als 50 Mol.%, vorzugsweise nicht mehr als 40 Mol.% entfallen.

Für die Auswahl der mit dem Polyurethanacrylatpolymeren zu kombinierenden Verbindungen kommen hauptsächlich in Frage Präpolymere mit zwei oder mehr polymerisierbaren Doppelbindungen und Molekulargewichten kleiner als 1500, vorzugsweise 500 bis 1100; mono-, bi- oder trifunktionelle Acrylester mit Molekulargewichten 180, vorzugsweise 220 bis 400, in Form von Derivaten einfacher alipohatischer, cycloaliphatischer oder aliphatischaromatischer Alkohole und Modifikationen davon, ferner monofunktionelle N-Vinylmonomere in Form von N-Vinyllactamen oder N-Vinylurethanen, hergestellt aus N-Vinylisocyanat und monofunktionellen Alkoholen.

Einzelne Vertreter hiervon sind auf der Seite der Präpolymeren Epoxidacrylate als Umsetzungsprodukte von Epoxidharzen mit Acrylsäure, vor allem jene aus Bisphenol A-Epoxidharzen; Polyesteracrylate, hergestellt aus hydroxylgruppenhaltigen Polyestern von aliphatischen, cycloaliphatischen und aromatischen Diolen und gesättigten Dicarbonsäuren und Acrylsäure sowie Urethanacrylate aus Di- oder Polyisocyanaten und Hydroxyalkylacrylaten, die auch mit Diolen kettenverlängert sein können.

Auf der Seite der Acrylsäureester-Monomeren sind zu nennen Phenoxiethylacrylat, 4-tert.-Butylcyclohexylacrylat, Isobornylacrylat, Dicyclopentadienylacrylat, Dicyclopentadienyloxyethylacrylat, Hexandioldiacrylat, 2-(2';5'-Dimethylphenyl-)ethylacrylat, 2-(o-Methylphenyl-)ethylacrylat, 2-(p-Methylphenyl-)ethylacrylat, Neopentylglykoldiacrylat, Triethylenglykoldiacrylat, Tetraethylglykoldiacrylat, Tripropylenglykoldiacrylat, Trimethylolpropantriacrylat.

Als N-Vinylmonomere sind hauptsächlich zu nennen N-Vinylpyrrolidon, N-Vinylimidazol, N-Vinylcaprolactam, das Umsetzungsprodukt von N-Vinylisocyanat mit Ethyldiglykol oder Phenylglykol.

Als modifizierte monofunktionelle Acrylester sind zu nennen die Umsetzungsprodukte der Monohydroxyalkylacrylate, wie sie auch zur Herstellung der Polyurethanacrylatpolymeren verwendet werden, mit monofunktionellen Isocyanaten wie Methyl-, Propyl-, Isopropyl-, n-Butyl- oder Phenylisocyanat.

Die Herstellung des kompletten Bindemittelgemisches für die Bindemittelmatrix der erfindungsgemässen magnetischen Aufzeichnungsträger aus den Einzelkomponenten erfolgt durch einfaches Abmischen. Wegen der stark polaren Natur dieser Bindemittel und der relativ niedrigen Durchschnittsmolekulargewichte treten häufig auf bestimmten Substraten Benetzungs- und Verlaufsprobleme auf. Üblicherweise werden deshalb den bekannten strahlungshärtbaren Überzugsmassen Verlaufshilfsmittel auf Basis organischer Siloxane, org. Fluorverbindungen und andere zugesetzt. Besonders bevorzugt sind hier handelsübliche fluororganische Hilfsmittel in Mengen von 0,1 bis 0,5 Gew.%, bezogen auf Bindemittelgemisch.

Die Herstellung der erfindungsgemässen magnetischen Aufzeichnungsträger erfolgt in an sich bekannter Weise. Hierzu wird das magnetische Material, Gamma-Eisen(III)-oxid, feinteiliger Magnetit, ferromagnetisches undotiertes oder dotiertes Chromdioxid, kobaltdotiertes Gamma-Eisen(III)-oxid oder feinteilige ferromagnetische Metalle und Metallegierungen, wie Legierungen aus Eisen und Kobalt, in einer Lösung der elektronenstrahlhärtbaren Bindemittel in einem organischen Lösungsmittel unter Verwendung sonstiger üblicher Hilfsmittel in einer Dispergiereinrichtung zu einer Dispersion verarbeitet. Die Magnetdispersion wird nun mit Hilfe üblicher Beschichtungsmaschinen, z.B. mittels eines Linealgiessers, auf den nichtmagnetisierbaren Träger aufgetragen. Als nichtmagnetische und nichtmagnetisierbare Träger lassen sich die üblichen Trägermaterialien verwenden, insbesondere von 6 bis 36 µm. Bevor die noch flüssige Beschichtungsmischung auf dem Träger getrocknet wird, was zweckmässigerweise bei Temperaturen von 50 bis 90°C während 2 bis 5 Minuten geschieht, werden die anisotropen Magnetteilchen durch die Einwirkung eines Magnetfeldes entlang der vorgesehenen Aufzeichnungsrichtung orientiert. Daran kann sich gegebenenfalls eine sehr schwache Anpolymerisierung der Beschichtung mit Elektronenstrahlen unter Verwendung einer Dosis von weniger als 20 kGray, vorzugsweise weniger als 3 kGray oder auch mit UV-Licht anschliessen. Danach werden die Magnetschichten auf üblichen Maschinen durch Hindurchführen zwischen geheizten und polierten Walzen, gegebenenfalls bei Anwendung von Druck und Temperatur von 30 bis 80°C, vorzugsweise 50 bis 70°C, geglättet und verdichtet. Die Dicke der Magnetschicht beträgt im allgemeinen 3 bis 20 µm, vorzugsweise 6 bis 15 µm.

Die Aushärtung der magnetischen Aufzeichnungsschicht erfolgt mittels beschleunigter Elektronen. Das Verfahren hierzu ist als Stand der Technik bekannt. Es kommen Elektronenbeschleuniger mit 150 bis 300 kV Beschleunigungsspannung in Frage. Sowohl Scanner- als auch Linearkathoden-Anlagen mit Spannungen von 150 bis 200 kV und Bestrahlungsleistungen von mehr als 500, vorzugsweise mehr als 1000 kGray/sec sind geeignet.

Die Bestrahlungszeit bzw. Bandgeschwindigkeit wird dabei so reguliert, dass die Magnetbeschichtung mit einer Energiedosis von 30 bis 150 kGray, vorzugsweise von 50 bis 100 kGray bestrahlt wird. Der für eine optimale Auspolymerisation der Doppelbindungen nötige Dosiswert schwankt etwas mit der Zusammensetzung und liegt durchschnittlich bei etwa 60 bis 70 kGray bei den mechanisch besten Bindemitteln. Eine Dosis von nur 10 kGray führt stets zu trockenen, klebfreien Beschichtungen, die aber noch keine ausreichend hohen mechanischen Eigenschaften besitzen.

Die Verwendung eines Polyurethanacrylates mit breiter Molekulargewichtsverteilung bei einem relativ niedrigen Durchschnittsmolekulargewicht, des Molekulargewichtszahlenmittels ermöglicht bei einer Giessviskosität von 400 bis 600 mPas der reinen Bindemittellösung Festkörpergehalte von ca. 40 bis 60 Gew.% je nach Molgewicht des Polyurethanacrylats sowie Art und Menge der zugesetzten strahlungshärtbaren Präpolymeren oder Monomeren. Bei der Herstellung von Magnetdispersionen ergibt sich überraschenderweise, dass bei Verwendung der angegebenen Bindemittel der Lösungsmittelbedarf selbst bei Molekulargewichten des Polyurethanacrylats von 6000 und darüber bzw. von 2000 bis 3000 als Molekulargewichtszahlenmittel nach Zusatz von Präpolymeren und Monomeren, nicht grösser ist als bei Bindemitteln, die nur aus solchen Präpolymeren und Monomeren bestehen.

Dadurch kann bei hochpigmentierten Dispersionen das Zahlenmittel des Molekulargewichts des polymerisierbaren Bindemittelgemisches von 400 bis 600 bisheriger Präpolymer/Monomer-Gemische auf 2000 bis 3000 erhöht und damit die mechanischen Eigenschaften verbessert werden. Als obere Grenze des Molekulargewichts des Polyurethanacrylates ist 10 000 gegeben.

Gegenüber den derzeit eingesetzten nicht elektronenstrahlhärtbaren Bindemittelsystemen ergibt sich eine Lösungsmitteleinsparung von bis zu 60 Gew.%.

Die erfindungsgemässen magnetischen Aufzeichnungsträger zeichnen sich durch eine ausgeprägte Homogenität und durch eine besonders glatte Oberfläche der Magnetschichten aus. Darüber hinaus ergeben sich weitere Verbesserungen der magnetischen, elektroakustischen und Video-Eigenschaften. Beachtenswert ist die Steigerung des Richtfaktors (Rf), d.h. der Orientierung der formanisotropen Teilchen in der vorgesehenen Aufzeichnungsrichtung und gemessen als Verhältnis der Remanenz längs der Orientierungsrichtung zu derjenigen quer dazu. Daraus folgert eine für die Aufzeichnungseigenschaften wichtige Steigerung der Remanenz und Rechteckigkeit der Magnetisierungskurve. Dementsprechend verbessern sich die Werte für Empfindlichkeit und Aussteuerbarkeit. Wesentlich ist auch die bei der Herstellung der erfindungsgemässen magnetischen Aufzeichnungsträger eine vereinfachte und überraschenderweise eine schnellere Dispergierung der feinteiligen magnetischen Teilchen im organischen Medium. Dieses daraus folgende schonendere Einarbeiten der magnetischen Teilchen bedingt eine geringe mechanische Belastung der meist nadelförmigen Teilchen, was sich ebenfalls in einer Verbesserung der Qualität der magnetischen Aufzeichnungsträger ausdrückt.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Gewicht.

Beispiele

Herstellung und Prüfung von Polyurethanacrylatpolymeren und daraus hergestellte Bindemittel

Die in den nachfolgenden Beispielen angegebenen Mengen der Ausgangs-Komponenten wurden nach folgendem allgemeinem Schema umgesetzt:

In einem gut getrockneten Rührgefäss mit Zulaufeinrichtung und Rückflusskühler werden sämtliche Hydroxyl-Verbindungen zusammen mit dem Lösungsmittel vorgelegt und zur Stabilisierung gegen vorzeitige Polymerisation der Acrylester-Doppelbindungen jeweils 1000 ppm, bezogen auf Gesamtgewicht aller Hydroxylverbindungen und Isocyanate, 2,6-di-tert.-Butyl-p-kresol und Tris(n-Cyclohexyl-diazoniumdioxy)aluminium hinzugefügt.

Der Ansatz wird unter einer Atmosphäre trokkenen Stickstoffs auf 50°C aufgeheizt. Man beginnt mit dem Zulauf des Isocyanats, wobei unter Kühlung eine Reaktionstemperatur von etwa 60°C eingestellt wird. Es werden 30 bis 60 Minuten für den Zulauf benötigt. Zum Abführen der Hauptmenge der Reaktionswärme wird noch etwa 30 Minuten weitergeführt und danach 1000 ppm Dibutylzinndilaurat, bezogen auf Gesamtgewicht aller Komponenten ohne Lösungsmittel, dem Ansatz hinzugefügt. Man rührt weitere 3 bis 5 Stunden nach, bis ein Restisocyanatgehalt von weniger als 0,1 Gew.% NCO erreicht ist.

Zum Schluss werden dem Ansatz für die weitere Verarbeitung noch 3000 ppm eines fluororganischen Oligomeren als Verlaufshilfsmittel zugesetzt und die erhaltene Polymerlösung über ein 5 µm Filter filtriert.

Die Berechnung der in den Beispielen angegebenen Kennzahlen hinsichtlich Molekulargewichtszahlenmittel, Vernetzungs- und NH-Konzentration basieren auf der Verwendung analytisch gewonnener Kennzahlen für die Einsatzstoffe wie Doppelbindungswert, Isocyanatgehalt und Hydroxylzahl, für die Umsetzung zum Polyurethanacrylat bzw. für Bindemittelabmischungen wurden aber den Berechnungen ideale Bedingungen unterstellt, die in der Praxis nur angenähert erfüllt sind. Vor allem Vernetzungsgrad und Molekulargewicht können von diesen Werten mit einem Fehler von durchschnittlich bis zu 10% versehen sein.

Die Grösse und Verteilung der Molekulargewichte wurde im allgemeinen durch eine Kombination von Viskometrie, Hochdruck-Gel-Permeationschromatographie, Lichtstreuung und Dampfdruckosmometrie ermittelt unter Verwendung der einfachsten Urethanacrylate als Modellverbindungen und Eichstandards.

Zur Prüfung der mechanischen Eigenschaften wurden Beschichtungen der Bindemittel auf Glasplatten mit einer Trockenfilmdicke von 60 bis 80 µm hergestellt, wobei das Lösungsmittel durch Ablüften über Nacht und eine Stunde im Vakuum, jeweils bei Raumtemperatur, entfernt wurde. Danach erfolgte die Elektronenbestrahlung unter Stickstoff mit einem Restsauerstoffgehalt von weniger als 200 ppm mit einer Beschleunigungsspannung von 175 kVolt und einer Dosis von 70 kGray auf einer Linearkathoden-Anlage vom Typ CB150/15/10 der Firma Energy Sciences Inc.

Die bestrahlten Filme wurden für eine eventuelle Nachhärtung bei Raumtemperatur 1 Tag offen gelagert und zur Entfernung geringer Mengen an Restlösungsmittel eine Stunde bei 100°C im Vakuum getempert. Anschliessend wurden die Filme vorsichtig von der Glasplatte mit Hilfe eines Trennmessers entfernt. Bei Verwendung des fluororg. Verlaufshilfsmittels liessen sich die Filme im allgemeinen ohne Probleme ablösen. In Einzelfällen ist eine Präparation freier Filme nur durch Beschichten auf Aluminiumfolie mit nachfolgendem Auflösen des Al mit verdünnter Natronlauge möglich.

Die mechanischen Eigenschaften wurden an den freien Filmen in Zug-Prüfungsverfahren ermittelt.

Der Elastizitätsmodul wurde nach DIN 53 457, meist als Sekantenmodul bei 0,1% Dehnung, bei 23°C bestimmt.

Die Prüfung der Reissfestigkeit und der Reissdehnung erfolgte nach DIN 53 504 ebenfalls bei 23°C.

## Beispiel 1

Bindemittelzusammensetzung : 100 Polyurethanacrylat 1
(Anteile ohne Lösungsmittel)
[Gewichtsteile]

| Komponenten im Polyurethanacrylat 1 (= PUA 1) | Äquivalenzverhältnis bez. auf 10 OH | Ansatzmenge [Gramm] |
|---|---|---|
| Isocyanat : TDI 80 | 10,00 | 304,5 |
| polymeres Diol : PBA 510 | 2,57 | 458,6 |
| einfaches Diol : CHDM | 4,99 | 125,6 |
| OH-Alkyl-Acrylat : HPA | 2,44 | 111,3 |
| Lösungsmittel : THF | | 430 |

Eigenschaften
Berechnet: NH-Konzentration [Mol/kg] : 3,50
Berechnet: Vernetzungs-Konz. [Mol/kg] : 0,85
Berechnet: Mol-Gew. [Zahlenmittel] : 2350

Gefunden: Mol-Gew. [Zahlenmittel] : 2400
Gefunden: Mol-Gew. [Gewichtsmittel] : 7550
Mw/Mn : 3,13

Festkörpergehalt bei 100 sec Auslaufzeit, Fordbecher 4 [Gew.%] : 51,9

Elastizitätsmodul [N/mm²]     : 203
Reissfestigkeit [N/mm²]       : 44,0
Reissdehnung [%]           : 313

Abkürzungen: TDI 80    = 2,4- + 2,6-Toluylendiisocyanat 80 : 20
            PBA 510   = Polybutandiol-1,4-adipat, OH-Äquivalentgewicht 510
            CHDM     = Cyclohexandimethanol (= 1,4-Bishydroxymethylcyclohexan)
            HPA       = 2-Hydroxypropylacrylat, Isomerenverhältnis 75 : 25

## Beispiel 2

Bindemittelzusammensetzung : 75 Polyurethanacrylat 2
(Anteile ohne Lösungsmittel)    25 Epoxidharzacrylat EPA 1050
[Gewichtsteile]

| Komponenten im Polyurethanacrylat 2 (= PUA 2) | Äquivalenzverhältnis bez. auf 10 OH | Ansatzmenge [Gramm] |
|---|---|---|
| Isocyanat : TDI 80 | 10,00 | 282,8 |
| polymeres Diol : PBA 510 | 3,19 | 528,7 |
| einfaches Diol : CHDM | 5,26 | 123,1 |
| OH-Alkyl-Acrylat : HPA | 1,55 | 65,4 |
| Lösungsmittel : THF | | 428 |

| Eigenschaften | : PUA 2 | Bindemittelgemisch |
|---|---|---|
| Berechnet: NH-Konzentration [Mol/kg] | : 3,25 | 2,44 |
| Berechnet: Vernetzungs-Konz. [Mol/kg] | : 0,50 | 0,84 |
| Berechnet: Mol-Gew. [Zahlenmittel] | : 4000 | |
| Gefunden: Mol-Gew. [Zahlenmittel] | : 3920 | |
| Gefunden: Mol-Gew. [Gewichtsmittel] | : 10970 | |
| Mw/Mn | : 2,80 | |
| Festkörpergehalt bei 100 sec Auslaufzeit, Fordbecher 4 [Gew.%] | : 46,8 | 53,3 |
| Elastizitätsmodul [N/mm²] | : 8 | 93 |
| Reissfestigkeit [N/mm²] | : 44,7 | 50,3 |
| Reissdehnung [%] | : 224 | 148 |

Abkürzungen: TDI 80    = 2,4- + 2,6-Toluylendiisocyanat 80 : 20
            PBA 510   = Polybutandiol-1,4-adipat, OH-Äquivalentgewicht 510
            CHDM     = Cyclohexandimethanol (= 1,4-Bishydroxymethylcyclohexan)
            HPA       = 2-Hydroxypropylacrylat, Isomerenverhältnis 64 : 36
            EPA 1050 = Epoxidharzacrylat, Molgewicht 1050, aus 2 Mol Bisphenol-A-Epoxidharz (Epoxid-
                        äquivalentgew. 186), 2 Mol Acrylsäure und 1 Mol Adipinsäure

## Beispiel 3

Bindemittelzusammensetzung : 75 Polyurethanacrylat 3
(Anteile ohne Lösungsmittel)    17,4 Epoxidharzacrylat EPA 1050
[Gewichtsteile]                    7,6 Epoxidharzacrylat EPA 520

| Komponenten im Polyurethanacrylat 3 (= PUA 3) | Äquivalenzverhältnis bez. auf 10 OH | Ansatzmenge [Gramm] |
|---|---|---|
| Isocyanat : TDI 80 | 10,0 | 282,7 |
| polymeres Diol : PBA 510 | 3,26 | 540,0 |
| einfaches Diol : CHDM | 5,71 | 133,6 |
| OH-Alkyl-Acrylat : HPA | 1,03 | 43,6 |
| Lösungsmittel : THF | | 428 |

Eigenschaften                                      : PUA 3      Bindemittelgemisch
Berechnet: NH-Konzentration [Mol/kg]   : 3,25      2,44
Berechnet: Vernetzungs-Konz. [Mol/kg]  : 0,33      0,85
Berechnet: Mol-Gew. [Zahlenmittel]     : 6000

Gefunden: Mol-Gew. [Zahlenmittel]      : 6080
Gefunden: Mol-Gew. [Gewichtsmittel]    : 17900
Mw/Mn                                  : 2,94

Festkörpergehalt bei 100 sec Auslaufzeit, Fordbecher 4 [Gew.%]         : 39,8       44,6

Elastizitätsmodul [N/mm²]              : 6          175
Reissfestigkeit [N/mm²]                : 52,0       48,0
Reissdehnung [%]                       : 304        175

Abkürzungen: TDI 80    = 2,4- + 2,6-Toluylendiisocyanat 80 : 20
             PBA 510   = Polybutandiol-1,4-adipat, OH-Äquivalentgewicht 510
             CHDM      = Cyclohexandimethanol (= 1,4-Bishydroxymethylcyclohexan)
             HPA       = 2-Hydroxypropylacrylat, Isomerenverhältnis 64 : 36
             EPA 1050  = Epoxidharzacrylat Molgewicht 1050, aus 2 Mol Bisphenol-A-Epoxidharz (Epoxid-
                         äquivalentgew. 186), 2 Mol Acrylsäure und 1 Mol Adipinsäure
             EPA 520   = Epoxidharzacrylat Molgewicht 520, aus 1 Mol Bisphenol-A-Epoxidharz (Epoxid-
                         äquivalentgew. 186) und 2 Mol Acrylsäure

                                         Beispiel 4
Bindemittelzusammensetzung : a) 100 PUA 4    b) 80 PUA 4
(Anteile ohne Lösungsmittel)                 20 EPA 520
[Gewichtsteile]

| Komponenten im Polyurethanacrylat 4 (= PUA 4) | Äquivalenzverhältnis bez. auf 10 OH | Ansatzmenge [Gramm] |
|---|---|---|
| Isocyanat : TDI 80 | 10,0 | 365,4 |
| polymeres Diol : PBA 510 | 3,28 | 702,9 |
| einfaches Diol : Dianol 22 | 5,52 | 366,3 |
| OH-Alkyl-Acrylat : HPA | 1,20 | 65,4 |
| Lösungsmittel : THF | | 1000 |

Eigenschaften                                      : a)        b)
Berechnet: NH-Konzentration [Mol/kg]   : 2,80      2,24
Berechnet: Vernetzungs-Konz. [Mol/kg]  : 0,33      1,00
Berechnet: Mol-Gew. [Zahlenmittel]     : 6000

Gefunden: Mol-Gew. [Zahlenmittel]      : 5600
Gefunden: Mol-Gew. [Gewichtsmittel]    : 16900
Mw/Mn                                  : 3,01

Festkörpergehalt bei 100 sec Auslaufzeit, Fordbecher 4 [Gew.%]         : 40,3       44,6

Elastizitätsmodul [N/mm²]              : 23         589
Reissfestigkeit [N/mm²]                : 39,6       52,0
Reissdehnung [%]                       : 270

Abkürzungen: TDI 80    = 2,4- + 2,6-Toluylendiisocyanat 80 : 20
             PBA 510   = Polybutandiol-1,4-adipat, OH-Äquivalentgewicht 510
             Dianol 22 = Bisethoxyliertes Bisphenol-A, OH-Äquivalentgew. 158
             HPA       = 2-Hydroxypropylacrylat, Isomerenverhältnis 75 : 25
             EPA 520   = Epoxidharzacrylat Molgewicht 520, aus 1 Mol Bisphenol-A-Epoxidharz (Epoxidäqui-
                         valentgew. 186) und 2 Mol Acrylsäure

Beispiel 5

Bindemittelzusammensetzung : 85,0 PUA 5
(Anteile ohne Lösungsmittel)  15,5 Epoxidharzacrylat EPA 520
[Gewichtsteile]  3,5 Tripropylenglykoldiacrylat

| Komponenten im Polyurethanacrylat 5 (= PUA 5) | Äquivalenzverhältnis bez. auf 10 OH | Ansatzmenge [Gramm] |
|---|---|---|
| Isocyanat : TDI 80 | 10,0 | 378,4 |
| polymeres Diol : PBA 510 | 2,98 | 660,0 |
| einfaches Diol : Dianol 22 | 5,29 | 363,4 |
| OH-Alkyl-Acrylat : HPA | 1,74 | 98,1 |
| Lösungsmittel : THF | | 1000 |

| Eigenschaften | : PUA 5 | Bindemittelgemisch |
|---|---|---|
| Berechnet: NH-Konzentration [Mol/kg] | : 2,9 | 2,46 |
| Berechnet: Vernetzungs-Konz. [Mol/kg] | : 0,50 | 0,85 |
| Berechnet: Mol-Gew. [Zahlenmittel] | : 4000 | |
| Gefunden: Mol-Gew. [Zahlenmittel] | : 4290 | |
| Gefunden: Mol-Gew. [Gewichtsmittel] | : 12800 | |
| Mw/Mn | : 2,98 | |
| Festkörpergehalt bei 100 sec Auslaufzeit, Fordbecher 4 [Gew.%] | : 44,0 | 47,3 |
| Elastizitätsmodul [N/mm²] | : 117 | 383 |
| Reissfestigkeit [N/mm²] | : 37,1 | 40,6 |
| Reissdehnung [%] | : 202 | 136 |

Abkürzungen: TDI 80 = 2,4- + 2,6-Toluylendiisocyanat 80 : 20
Dianol 22 = Bisethoxyliertes Bisphenol-A, OH-Äquivalentgew. 158
HPA = 2-Hydroxypropylacrylat, Isomerenverhältnis 75 : 25
EPA 520 = Epoxidharzacrylat Molgewicht 520, aus 1 Mol Bisphenol-A-Epoxidharz (Epoxidäquivalentgew. 186) und 2 Mol Acrylsäure.

Beispiel 6

2956 Teile einer 60,9%igen Polyacrylatlösung in THF, wie in Beispiel 1 beschrieben, wurde zusammen mit 7844 Teilen Tetrahydrofuran sowie mit 9000 Teilen Chromdioxid mit einer Koerzitivfeldstärke von 41,2 kA/m, 9,0 Teile Siliconöl und 225 Teilen Zinkoleat in einer 30 000 Volumenteile fassenden und mit 40 000 Gewichtsteilen Stahlkugeln eines Durchmessers von 4 bis 6 mm gefüllten Kugelmühle 34 Stunden dispergiert. Die erhaltene Dispersion wurde unter Druck durch einen Filter vom 5 µm Poren filtriert und auf eine 12 µm dicke Polyethylenterephthalatfolie mittels eines üblichen Linealgiessers aufgetragen.

Die beschichtete Folie wurde nach Durchlaufen eines üblichen Magnetfeldes zur Ausrichtung der magnetischen Teilchen zwischen 60 und 80°C getrocknet. Nach der Trocknung wurde die Magnetschicht der beschichteten Folie durch zweimaliges Hindurchziehen zwischen beheizten Walzen (70°C unter einem Liniendruck von 35 kg/cm) verdichtet und geglättet. Die Dicke der Magnetschicht betrug dann 3,9 µm. Die Beschichtungen wurden anschliessend mit einer Elektronenstrahldosis von 70 kGray gehärtet. Nach dem Schneiden der beschichteten Folie in 3,81 mm breite Audiobänder wurden diese magnetischen und elektroakustischen und mechanischen Prüfungen unterworfen. An der beschichteten Folie wurde die Oberflächenrauhigkeit als gemittelte Rauhtiefe $R_z$ gemäss DIN 4768, Blatt 1, bestimmt. Bei den Aufzeichnungseigenschaften wurden die elektroakustischen Werte gemäss DIN 45 401, 45 403 und 45 512 (Blatt 12) gegen das Bezugsband T 308 S geprüft.

Magnetwerte
| | |
|---|---|
| $H_c$ (kA/m) | 41,6 |
| Mr (mT) | 191 |
| Richtfaktor | 3,8 |
| $R_z$ | 0,276 |

Elektroakustische Daten
| | |
|---|---|
| $E_T$ (dB) | +1,8 |
| $E_H$ (dB) | +2,5 |
| $A_T$ (dB) | +3,8 |
| $A_H$ (dB) | +2,8 |
| $RG_A$ (dB) | −0,8 |
| Ko (dB) | −1,0 |

Die Bänder wiesen ausserdem gute Reibungskoeffizienten und elektrische Widerstandswerte auf.

Beispiel 7

547,6 Teile einer 48,7%igen Polyacrylatlösung in THF, wie in Beispiel 2 beschrieben, wurde zusammen mit 1039,1 Teilen Tetrahydrofuran sowie mit 1200 Teilen Chromdioxid mit einer Koerzitivfeldstärke von 41,3 kA/m, 1,2 Teile Siliconöl und 30 Teilen Zinkoleat in einer 6000 Volumenteile fassenden und mit 8000 Gewichtsteilen Stahlkugeln eines Durchmessers von 4 bis 6 mm gefüllten Kugelmühle 46 Stunden dispergiert. Die erhaltene Dispersion wurde unter Druck durch einen Filter mit 5 $\mu$m Poren filtriert und auf eine 12 $\mu$m dicke Polyethylenterephthalatfolie mittels eines üblichen Linealgiessers aufgetragen.

Die beschichtete Folie wurde nach Durchlaufen eines üblichen Magnetfeldes zur Ausrichtung der magnetischen Teilchen zwischen 60 und 80°C getrocknet. Nach der Trocknung wurde die Magnetschicht der beschichteten Folie durch zweimaliges Hindurchziehen zwischen beheizten Walzen (70°C unter einem Liniendruck von 35 kg/cm) verdichtet und geglättet. Die Dicke der Magnetschicht betrug dann 5,6 $\mu$m. Die Beschichtungen wurden anschliessend mit einer Elektronenstrahldosis von 70 kGray gehärtet. Nach dem Schneiden der beschichteten Folie in 3,81 mm breite Audiobänder wurde diese magnetischen und elektroakustischen und mechanischen Prüfungen, wie in Beispiel 6 angegeben, unterworfen.

Magnetwerte

| | |
|---|---|
| $H_c$ (kA/m)   ·   | 41,3 |
| Mr (mT) | 181 |
| Richtfaktor | 3,7 |
| $R_z$ | 0,250 |

Elektroakustische Daten

| | |
|---|---|
| $E_T$ (dB) | +1,7 |
| $E_H$ (dB) | +1,6 |
| $A_T$ (dB) | +3,5 |
| $A_H$ (dB) | +1,5 |
| $RG_A$ (dB) | −0,4 |
| Ko (dB) | −1,5 |

Beispiel 8

Beispiel 7 wurde mit 606,1 Teilen der 44,0%igen Bindemittellösung, wie im Beispiel 3 beschrieben, unter Zusatz von 980,6 Teilen Tetrahydrofuran wiederholt.

Magnetwerte

| | |
|---|---|
| $H_c$ (kA/m) | 40,3 |
| Mr (mT) | 181 |
| Richtfaktor | 3,7 |
| $R_z$ | 0,272 |
| Schichtdicke | 5,7 $\mu$m |

Elektroakustische Daten

| | |
|---|---|
| $E_T$ (dB) | +1,8 |
| $E_H$ (dB) | +2,2 |
| $A_T$ (dB) | +3,9 |
| $A_H$ (dB) | +2,2 |
| $RG_A$ (dB) | −0,8 |
| Ko (dB) | −1,5 |

Die Bänder wiesen ausserdem gute Reibungskoeffizienten und elektrische Widerstandswerte auf.

Beispiel 9

Das Beispiel 7 wurde mit 632 Teilen der 38%igen Bindemittellösung, wie im Beispiel 4a beschrieben, unter Zuführung von 392 Teilen Dioxan und 536 Teilen des Lösungsmittelsgemisches aus gleichen Teilen Tetrahydrofuran/Dioxan nach 96stündiger Kugelzeit wiederholt. Die 3,81 mm Bänder wiesen besonders hohe Kopierdämpfungswerte auf.

Magnetwerte

| | |
|---|---|
| $H_c$ (kA/m) | 49,2 |
| Mr (mT) | 170 |
| Richtfaktor | 3,7 |
| $R_z$ | 0,220 |
| Schichtdicke | 5,0 $\mu$m |

Elektroakustische Daten

| | |
|---|---|
| $E_T$ (dB) | +0,1 |
| $E_H$ (dB) | +4,2 |
| $A_T$ (dB) | +0,6 |
| $A_H$ (dB) | +6,5 |
| $RG_A$ (dB) | +0,4 |
| Ko (dB) | +3,0 |

Die Bänder wiesen ausserdem gute Reibungskoeffizienten und elektrische Widerstandswerte auf.

Beispiel 10

Das Beispiel 6 wurde mit 2956 Teilen der 60,9%igen Bindemittellösung in THF, wie im Beispiel 4a beschrieben, mit einer Dispergierzeit von 95 Stunden wiederholt. Die Schichtdicke der Beschichtungen lag bei 5,0 $\mu$m. Nach dem Schneiden der beschichteten Folie in ½″ breite Videobänder wurden auf einem VHS-Recorder die folgenden Videodaten ermittelt.

Videodaten: gegen $CrO_2$-Referenzband

| | |
|---|---|
| Pegel bei 4,5 MHz | +3,8 dB |
| Pegel bei 0,63 MHz | +4,2 dB |
| Störabstand | +2,0 dB |
| Chroma-Störabstand | +1,2 dB |
| Fehlerzahl/min. | 63 bei einem |
| | Pegeleinbruch von 20 dB. |

Die Standbildfestigkeit lag über 60 Minuten.

Beispiel 11

Das Beispiel 7 wurde mit 545,3 Teilen der 48,9%igen Bindemittellösung in Tetrahydrofuran, wie im Beispiel 5 beschrieben, unter Zusatz von 1041,4 Teilen Tetrahydrofuran wiederholt. Die Kugelzeit lag bei 48 Stunden. Die Dicke der Magnetschicht betrug 5,7 $\mu$m.

Magnetwerte

| | |
|---|---|
| $H_c$ (kA/m) | 41,7 |
| Mr (mT) | 190 |

| Richtfaktor | 3,9 |
|---|---|
| $R_z$ | 0,263 |

Elektroakustische Daten

| $E_T$ (dB) | +1,5 |
|---|---|
| $E_H$ (dB) | +3,5 |
| $A_T$ (dB) | +3,9 |
| $A_H$ (dB) | +3,3 |
| $RG_A$ (dB) | −0,4 |
| Ko (dB) | +0,5 |

Die Bänder wiesen ausserdem gute Reibungskoeffizienten und elektrische Widerstandswerte auf.

**Patentanspruch**

Magnetische Aufzeichnungsträger aus einem nichtmagnetischen Trägermaterial mit mindestens einer Magnetschicht, bestehend aus einer organischen Bindemittelmatrix mit darin feinverteiltem magnetischem Material, wobei die Bindemittelmatrix durch Elektronenstrahlhärtung einer Mischung aus 60 bis 100 Gew.% eines Polyurethanacrylatpolymeren mit polymerisierbaren Doppelbindungen und 0 bis 40 Gew.% eines Acrylsäureesters und/oder -präpolymeren und/oder N-Vinylmonomeren und/oder -präpolymeren erhalten wird, und das Polyurethanacrylatpolymere aus

1) mindestens einem Diisocyanat,
2) mindestens einem oligomeren oder polymeren Diol,
3) mindestens einem niedermolekularen cyclischen Diol und
4) mindestens einem Monohydroxyalkylacrylat

aufgebaut ist, wobei der Anteil der NCO-Gruppen des Diisocyanats 95 bis 105% der äquivalenten Mengen an OH-Gruppen der Komponenten 2 bis 4 beträgt und die Molmengen der OH-gruppenhaltigen Komponenten derart bemessen sind, dass sich eine Konzentration von 2,4 bis 3,9 Mol Urethangruppe je Kilogramm Polyurethanacrylatpolymeres ergibt, mit der Massgabe, dass das mittlere Molekulargewicht des Polymeren im Zahlenmittel 1800 bis 10 000 und das Verhältnis aus Gewichtsmittel zu Zahlenmittel des Molgewichts 2,2 bis 3,5 beträgt.

**Claim**

A magnetic recording medium which comprises a non-magnetic base and one or more magnetic layers consisting of an organic binder matrix containing finely divided magnetic material, the said matrix being obtained by electron beam curing of a mixture of from 60 to 100% by weight of a polyurethane acrylate polymer possessing polymerizable double bonds and from 0 to 40% by weight of an acrylate and/or an acrylate prepolymer and/or an N-vinyl monomer and/or an N-vinyl prepolymer and the polyurethane acrylate polymer being composed of

1) one or more diisocyanates,
2) one or more oligomeric or polymeric diols,
3) one or more low molecular weight cyclic diols, and
4) one or more monohydroxyalkyl acrylates,

wherein the amount of NCO groups of the diisocyanate is from 95 to 105% of the number of equivalents of OH groups of components 2, 3 and 4 and the molar amounts of the OH-containing components are chosen so that the concentration of urethane groups is from 2.4 to 3.9 moles per kg of polyurethane acrylate polymer, with the proviso that the number average molecular weight of the polymer is from 1,800 to 10,000 and the ratio of the weight average to the number average molecular weight is from 2.2 to 3.5.

**Revendication**

Support d'enregistrement magnétique en matière de support non magnétique, avec au moins une couche magnétique constituée par une matrice de liant organique et matière magnétique finement dispersée, la matrice de liant étant obtenue par durcissement par rayonnement électronique d'un mélange de 60 à 100% en poids d'un polymère d'acrylate de polyuréthane à doubles liaisons polymérisables et 0 à 40% en poids d'un ester d'acide acrylique et/ou prépolymère d'ester d'acide acrylique et/ou monomère N-vinylique et/ou prépolymère N-vinylique et le polymère d'acrylate de polyuréthane étant constitué de

1) au moins un diisocyanate,
2) au moins un diol oligomère ou polymère,
3) au moins un diol cyclique à bas poids moléculaire et
4) au moins un acrylate de monohydroxyalkyle,

la proportion de groupes NCO du diisocyanate étant de 95 à 105% de la quantité équivalente de groupes OH des composants 2 à 4 et les quantités molaires des composants à groupes OH étant déterminées de manière qu'il existe une concentration de 2,4 à 3,9 moles de groupe méthane par kilogramme de polymère d'acrylate de polyuréthane, sous réserve que le poids moléculaire moyen de polymère, en nombre, soit de 1800 à 10 000 et que le rapport entre moyenne en poids et moyenne en nombre du poids moléculaire soit de 2,2 à 3,5.